Europäisches Patentamt

European Patent Office

Office européen des brevets

(11) Veröffentlichungsnummer: **0 476 254 A1**

# EUROPÄISCHE PATENTANMELDUNG

(21) Anmeldenummer: **91111326.4**

(22) Anmeldetag: **08.07.91**

(51) Int. Cl.5: **B60R 11/02**

(30) Priorität: **31.08.90 DE 9012445 U**

(43) Veröffentlichungstag der Anmeldung:
**25.03.92 Patentblatt 92/13**

(84) Benannte Vertragsstaaten:
**AT CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**W-8510 Fürth/Bay.(DE)**

(72) Erfinder: **Einbrodt, Herbert Grundig E.M.V.**
**Max Grundig holländ. Stiftung & Co. KG**
**Kurgartenstrasse 37, W-8510 Fuerth(DE)**

(54) Einrichtung für den Einbau eines Audio- oder Videowiedergabegerätes in ein Kraftfahrzeug.

㊸ Es wird eine Einrichtung (3) zum Einbau eines Audio- oder Video-Wiedergabegerätes (5) in ein Kraftfahrzeug beschrieben. Geräte dieser Art müssen im Kraftfahrzeug an Stellen untergebracht werden, an denen sie zum einen keine Behinderung darstellen und zum anderen leicht zugänglich sind. Armaturenbrett oder Konsole in Kraftfahrzeugen sind für kleinere Geräte wie Autoradios oder Autokassettengeräte zwar gut geeignet, bieten jedoch für größere Geräte, wie z.B. CD-Wechsler oder Video-Geräte zu wenig Raum. Die erfindungsgemäße Einrichtung (3) wird in die ein- und ausklappbare Armlehne (1) im Fond des Kraftfahrzeuges integriert.

Fig. 1

Die Erfindung betrifft eine Einrichtung zum Einbau eines Audio-Video-Wiedergabegerätes in ein Kraftfahrzeug gemäß dem Oberbegriff des Patentanspruchs 1.

Audio- oder Video-Wiedergabegeräte sind heute Bestandteil der Innenausstattung von Kraftfahrzeugen. Bekannterweise sind diese Geräte an den verschiedensten Stellen des Kraftfahrzeuges untergebracht, wie es platzmäßig realisierbar ist und ergonomisch sinnvoll erscheint. Ein bevorzugter Platz zum Unterbringen von z.B. Autoradios mit Audio-Wiedergabegeräten ist das Armaturenbrett. Bekannt sind auch Einbauten solcher Geräte in Konsolen unterhalb des Armaturenbretts oder auf der Mittelkonsole des Kraftfahrzeuges. Alle diese genannten Gerätestandorte behindern die Kraftfahrzeug-Insassen nicht und gewährleisten eine relativ einfache und übersichtliche Bedienung der Geräte.

Entschieden schwieriger gestaltet sich jedoch das Unterbringen von Audio- oder Video-Wiedergabegeräten im Kraftfahrzeug, die aufgrund der Größe und Beschaffenheit ihres Speichermediums und ihrer Konstruktion ein wesentlich größeres Volumen aufweisen, wie es beispielsweise bei CD-Wechslern (Compact Disc) der Fall ist.

Durch die Größe des eine größere Anzahl von CD's aufnehmenden Magazins und der notwendigen Wechselmechanik zusätzlich zur eigentlichen CD-Abspieleinheit wird das Volumen eines solchen Gerätes im Vergleich zu dem eines Autoradios relativ groß, so daß die eingangs genannten Montageplätze für ein Gerätevolumen dieser Größenordnung nicht mehr ausreichen. Die gleiche Überlegung gilt für ein Video-Wiedergabegerät.

So weicht man gezwungenermaßen auf Räume im Kraftfahrzeug aus, die zur Aufnahme solch großer Volumina besser geeignet sind. Es ist beispielsweise aus "Journal of the Electronics Industry" (JEI) vom März 1989, Seite 35, ein im Kofferraum eines Kraftfahrzeuges montierter CD-Wechsler bekannt. Dieser Standort des CD-Wechslers weist jedoch zwei entscheidende Nachteile auf. So wird zum einen der Raum des Kofferraums um das Volumen des CD-Wechslers reduziert, und zum anderen ist die Zugänglichkeit, z.B. beim Wechseln des CD-Magazins, sehr erschwert.

Der Erfindung liegt nun die Aufgabe zugrunde, ein Audio- oder Video-Wiedergabegerät in einem Kraftfahrzeug so unterzubringen, daß sein Vorhandensein einerseits für die Fahrgäste nicht störend und andererseits die Zugänglichkeit beim Wechseln des Magazins bzw. der Kassette möglichst einfach ist.

Diese Aufgabe wird durch die kennzeichnenden Merkmale im Patentanspruch 1 gelöst. Die Unteransprüche kennzeichnen weitere vorteilhafte Ausführungen der Erfindung.

Die im Patentanspruch 1 genannte Einrichtung gestattet die Montage eines Audio-Video-Wiedergabegerätes in einer Art, wie sie von den Fahrgästen als nicht störend empfunden wird, da der zur Verfügung stehende Fahrgastraum durch das Vorhandensein des Gerätes nicht reduziert wird. Ein Magazinwechsel ist von im Fond sitzenden Fahrgästen jederzeit leicht und vom Fahrer während einer Fahrpause ganz problemlos durchführbar.

Vorteilhaft an der Erfindung ist die Möglichkeit, das in die Armlehne integrierte Audio-Video-Wiedergabegerät in die Rückenlehne der Sitze zurückzuklappen und somit nötigenfalls ganz aus dem Sitzbereich zu entfernen.

Ein weiterer Vorteil der Erfindung besteht darin, daß die Einrichtung zur Aufnahme des Audio-Video-Wiedergabegeräts mit eingesetztem Gerät als Einheit mit der Armlehne hergestellt werden kann und als zusätzlich einbaubares Teil in das Kraftfahrzeug einsetzbar ist.

Die Erfindung soll anhand der Zeichnungen näher erläutert werden. Es zeigen:

Fig. 1     eine Teilansicht einer Sitzbank im Fahrgastraum eines Kraftfahrzeuges mit herausgeklappter Armlehne mit integrierter erfindungsgemäßer Einrichtung und zum Einbau vorbereitetem Audio- oder Video-Wiedergabegerät mit Bodenbefestigung,

Fig. 2     einen Ausschnitt einer Armlehne mit erfindungsgemäßer Einrichtung und zum Einbau vorbereitetem Audio-Video-Wiedergabegerät mit hängender Befestigung am Rahmenteil.

In der herausgeklappten Armlehne 1 einer Sitzbank 2 im Fahrgastraum eines Kraftfahrzeuges ist die Einrichtung 3 gemäß der Erfindung integriert. Am Boden der Einrichtung 3 sind Befestigungsgewinde 4 zur Befestigung des zum Einbau vorbereiteten Audio-Video-Wiedergabegeräts 5 vorhanden, welches über die an seinen beiden Schmalseiten befindlichen Befestigungswinkel 6 im Boden der Einrichtung 3 angeschraubt werden kann. Das Verbindungskabel 7 mit Stecker 8 dient zusammen mit der Kontaktbuchse 9 und dem weiterführenden Verbindungskabel 10 zur elektrischen Verbindung des Gerätes mit an anderen Stellen des Kraftfahrzeuges befindlichen, hier nicht gezeichneten Geräten wie Verstärker, Lautsprecher, Fernbedienung und dergleichen. Die Armlehne ist in Pfeilrichtung aus- und einklappbar.

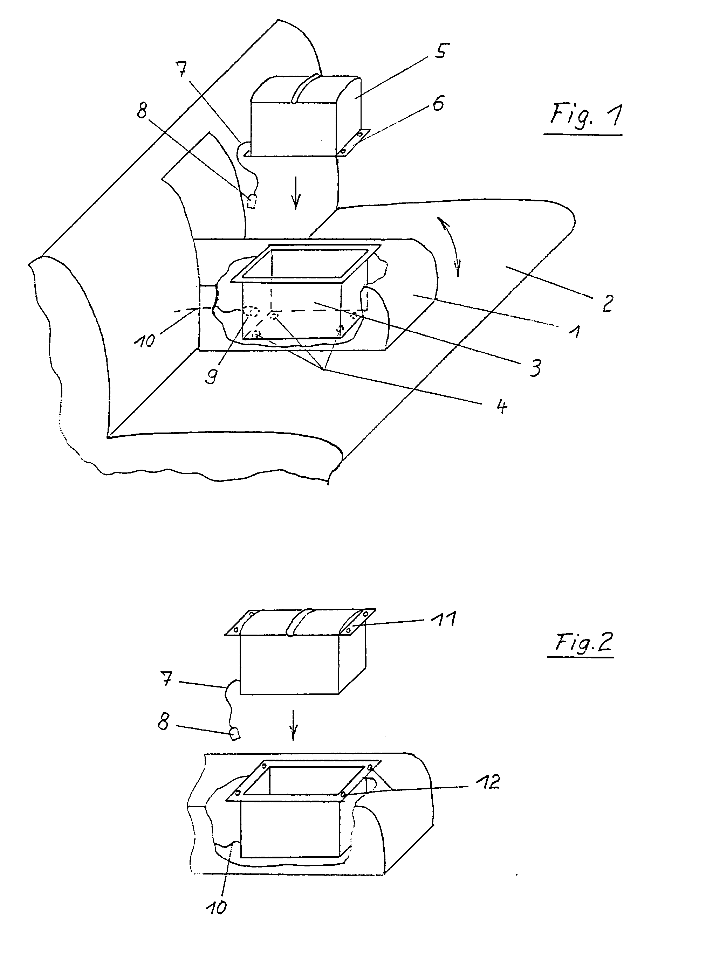

Die Figur 2 stellt im wesentlichen die Einrichtung nach Fig. 1 dar lediglich mit dem Unterschied, daß das Audio-Video-Wiedergabegerät hängend, d.h. über Befestigungswinkel 11 in Gewindebohrungen 12 des Rahmenteils befestigbar ist.

In einer bevorzugten, aber nicht ausschließlichen Ausführung der erfindungsgemäßen Einrichtung, ist das Audio-Video-Wiedergabegerät ein Abspielgerät für Compact-Disc-Platten mit automatischem Wechsler und Plattenmagazin.

**Patentansprüche**

1. Einrichtung für den Einbau eines Audio- oder Video-Wiedergabegerätes (5) in ein Kraftfahrzeug, **dadurch gekennzeichnet**, daß das Gerät der Raumform einer fest oder schwenkbar im Kraftfahrzeug eingebauten Armlehne (1) angepaßt ist.

2. Einrichtung nach Anspruch 1, **dadurch gekennzeichnet**, daß die Einrichtung (3) aus einem rechteckförmigen Rahmenteil mit sich wannenförmig erweiterndem Gehäuseteil besteht, welches in einer dem Gehäuseteil in der Form entsprechenden Vertiefung in der Armlehne (1) eingebaut ist und die zum Anschließen eines Audio- oder Video-Wiedergabegerätes (5) notwendigen elektrischen Verbindungen (9,10) aufweist.

3. Einrichtung nach Anspruch 2, **dadurch gekennzeichnet**, daß das wannenförmig sich erweiternde Rahmenteil Befestigungsbohrungen (4,12) zur Aufnahme eines Audio- oder Video-Wiedergabegeräts (5) aufweist.

4. Einrichtung nach einem der vorhergehenden Ansprüche, **dadurch gekennzeichnet**, daß diese mit der Armlehne (1) eine Einheit bildet und mit dieser einstückig und typenspezifisch für das Kraftfahrzeug gestaltet ist.

5. Einrichtung nach einem der vorhergehenden Ansprüche, **dadurch gekennzeichnet**, daß zur elektrischen Verbindung mit weiterführenden Kabeln eine Kontaktbuchse (9) vorgesehen ist.

6. Einrichtung nach einem der vorhergehenden Ansprüche, **dadurch gekennzeichnet**, daß das Wiedergabegerät ein CD-Wechsler ist.

*Fig. 1*

*Fig.2*

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 501 013 (SATO) <br> * Zusammenfassung; Abbildungen 1,3,4 * * * Spalte 3, Zeile 33 - Zeile 56 * * * Spalte 4, Zeile 34 - Zeile 56 * * <br> – – – | 1,2,4-6 | B 60 R 11/02 |
| Y | US-A-4 854 145 (ARAI ET AL.) <br> – – – | 1,2,4,5 | |
| A | US-A-4 854 145 (* Abbildungen 1-3 *) <br> * Spalte 2, Zeile 12 - Zeile 45 * * <br> – – – | 3 | |
| Y | DE-A-2 536 854 (STEAG AG) <br> * Abbildung * * * Ansprüche 1,2 * * <br> – – – | 1,2,4 | |
| Y | US-A-3 799 483 (CHIAPPINELLI) <br> – – – | 1,2,4 | |
| A | US-A-3 799 483 (* Spalte 2, Zeile 18 - Spalte 4, Zeile 20 *) <br> – – – | 3 | |
| Y | DE-A-3 542 291 (SCHAFFER ERWIN) <br> * Abbildungen 1-4 * * * Spalte 2, Zeile 65 - Spalte 3, Zeile 37 * * <br> – – – – – | 6 | |

RECHERCHIERTE SACHGEBIETE (Int. Cl.5)

B 60 R

Der vorliegende Recherchenbericht wurde für alle Patentansprüche erstellt

| Recherchenort | Abschlußdatum der Recherche | Prüfer |
|---|---|---|
| Den Haag | 19 Dezember 91 | D'SYLVA C.H.A. |